# EUROPEAN PATENT SPECIFICATION

(11) **EP 2 692 173 B1**
(45) Date of publication and mention of the grant of the patent: **23.03.2016**
(21) Application number: 12712506.0
(22) Date of filing: 28.03.2012
(51) Int. Cl.: H04W 36/00

(54) **METHOD AND APPARATUS FOR REDUCING POWER CONSUMPTION ASSOCIATED WITH PERFORMING RESELECTION IN A MULTI-RAT SYSTEM**
VERFAHREN UND VORRICHTUNG ZUR VERRINGERUNG DES STROMVERBRAUCHS IM ZUSAMMENHANG MIT DER NEUAUSWAHL IN EINEM MULTI-RAT-SYSTEM
PROCÉDÉ ET APPAREILS DE RÉDUCTION DE LA CONSOMMATION ÉLECTRIQUE ASSOCIÉE À LA MISE EN UVRE D'UNE RESÉLECTION DANS UN SYSTÈME À TECHNOLOGIES RAT MULTIPLES

(30) Priority: 28.03.2011 US 201161468460 P; 27.03.2012 US 201213431452
(43) Date of publication of application: 05.02.2014
(60) Divisional application: 14173822.9
(73) Proprietor: Qualcomm Incorporated, San Diego, CA 92121-1714 (US)
(72) Inventor: SWAMINATHAN, Arvind, San Diego, California 92121 (US); BALASUBRAMANIAN, Srinivasan, San Diego, California 92121 (US); MAHAJAN, Amit, San Diego, California 92121 (US)
(74) Representative: Wegner, Hans
(86) International application number: PCT/US2012/030908
(87) International publication number: WO 2012/135326

(56) References cited:
- EP-A1- 1 962 535
- US-A1- 2010 142 483
- US-A1- 2010 278 066
- "3GPP2 C.S0087-0 v2.0, E-UTRAN - cdma2000 HRPD Connectivity and Interworking: Air Interface Specification", 3RD GENERATION PARTNERSHIP PROJECT 2 "3GPP2", [Online] 1 January 2010 (2010-01-01), pages 1-409, XP002677256, Retrieved from the Internet: URL:http://www.3gpp2.org> [retrieved on 2012-06-06] cited in the application
- "3GPP2 C.P0097-0 initial draft, E-UTRAN - cdma2000 1x Connectivity and Interworking Air Interface Specification", 3RD GENERATION PARTNERSHIP PROJECT 2 "3GPP2", [Online] 1 January 2011 (2011-01-01), pages 1-69, XP002677257, Retrieved from the Internet: URL:http://www.3gpp2.org> [retrieved on 2012-06-06] cited in the application

## Description

### BACKGROUND

### Technical Field

Certain aspects of the present disclosure generally relate to wireless communications and, more particularly, to performing reselection in a network that supports multiple radio access technologies (RATs).

### Background

Wireless communication networks are widely deployed to provide various communication services such as telephony, video, data, messaging, broadcasts, and so on. Such networks, which are usually multiple access networks, support communications for multiple users by sharing the available network resources. One example of such a network is the Universal Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). For example, China is pursuing TD-SCDMA as the underlying air interface in the UTRAN architecture with its existing GSM infrastructure as the core network. The UMTS also supports enhanced 3G data communications protocols, such as High Speed Downlink Packet Data (HSDPA), which provides higher data transfer speeds and capacity to associated UMTS networks.

Some networks support mobility between at least three RATs. For example, 3GPP2 standards support mobility between CDMA 1x, data optimized (DO) and Long Term Evolution (LTE) RATs. Unfortunately, taking and managing measurements needed to perform reselection may consume a substantial power and present challenges.

### SUMMARY

Certain aspects of the present disclosure provide a method for wireless communications. The method generally includes obtaining, in a network that supports first and second radio access technologies (RATs), a neighbor list of base stations of a third RAT and determining, based on one or more criteria, whether to transmit the neighbor list on the first RAT, the second RAT, or both the first and second RATs.

Certain aspects of the present disclosure provide a method for wireless communications. The method generally includes obtaining, via a first radio access technology (RAT), a first neighbor list with information for base stations of a third RAT, obtaining, via a second RAT, a second neighbor list with information for base stations of the third RAT, and combining information from the first and second neighbor lists. In aspects, the method may further include deciding whether to take measurements in the third RAT based on the combined information.

Certain aspects of the present disclosure provide a method for wireless communications. The method generally includes obtaining, via a first radio access technology (RAT), a first neighbor list with information for base stations of a third RAT, obtaining, via a second RAT, a second neighbor list with information for base stations of the third RAT, and maintaining a central entity with at least one of measurements taken in the third RAT based on information in the first neighbor list or measurements taken in the third RAT based on information in the second neighbor list. In aspects, the method may further include deciding whether to perform cell reselection to the third RAT based at least on measurements in the central entity.

Certain aspects of the present disclosure provide an apparatus for wireless communications. The apparatus generally includes means for includes obtaining, in a network that supports first and second radio access technologies (RATs), a neighbor list of base stations of a third RAT and means for determining, based on one or more criteria, whether to transmit the neighbor list on the first RAT, the second RAT, or both the first and second RATs.

Certain aspects of the present disclosure provide an apparatus for wireless communications. The apparatus generally includes means for obtaining, via a first radio access technology (RAT), a first neighbor list with information for base stations of a third RAT, means for obtaining, via a second RAT, a second neighbor list with information for base stations of the third RAT, and means for combining information from the first and second neighbor lists.

Certain aspects of the present disclosure provide an apparatus for wireless communications. The apparatus generally includes means for obtaining, via a first radio access technology (RAT), a first neighbor list with information for base stations of a third RAT, means for obtaining, via a second RAT, a second neighbor list with information for base stations of the third RAT, and means for maintaining a central entity with at least one of measurements taken in the third RAT based on information in the first neighbor list or measurements taken in the third RAT based on information in the second neighbor list.

Certain aspects of the present disclosure provide an apparatus for wireless communications. The apparatus generally includes at least one processor configured to obtain, in a network that supports first and second radio access technologies (RATs), a neighbor list of base stations of a third RAT and determine, based on one or more criteria, whether to transmit the neighbor list on the first RAT, the second RAT, or both the first and second RATs.

Certain aspects of the present disclosure provide an apparatus for wireless communications. The apparatus generally includes at least one processor configured to obtain, via a first radio access technology (RAT), a first neighbor list with information for base stations of a third RAT, obtain, via a second RAT, a second neighbor list with information for base stations of the third RAT, and combine information from the first and second neighbor lists.

Certain aspects of the present disclosure provide an apparatus for wireless communications. The apparatus generally includes at least one processor configured to obtain, via a first radio access technology (RAT), a first neighbor list with information for base stations of a third RAT, obtain, via a second RAT, a second neighbor list with information for base stations of the third RAT, and maintain a central entity with at least one of measurements taken in the third RAT based on information in the first neighbor list or measurements taken in the third RAT based on information in the second neighbor list.

Certain aspects of the present disclosure provide a program product comprising a computer-readable medium having instructions stored thereon. The instructions are generally executable by one or more processors for obtaining, in a network that supports first and second radio access technologies (RATs), a neighbor list of base stations of a third RAT and determining, based on one or more criteria, whether to transmit the neighbor list on the first RAT, the second RAT, or both the first and second RATs.

Certain aspects of the present disclosure provide a program product comprising a computer-readable medium having instructions stored thereon. The instructions are generally executable by one or more processors for obtaining, via a first radio access technology (RAT), a first neighbor list with information for base stations of a third RAT, obtaining, via a second RAT, a second neighbor list with information for base stations of the third RAT, and combining information from the first and second neighbor lists.

Certain aspects of the present disclosure provide a program product comprising a computer-readable medium having instructions stored thereon. The instructions are generally executable by one or more processors for obtaining, via a first radio access technology (RAT), a first neighbor list with information for base stations of a third RAT, obtaining, via a second RAT, a second neighbor list with information for base stations of the third RAT, and maintaining a central entity with at least one of measurements taken in the third RAT based on information in the first neighbor list or measurements taken in the third RAT based on information in the second neighbor list.

Numerous other aspects are provided including apparatus and computer program products.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates an example multiple access wireless communication system in accordance with certain aspects of the present disclosure.
FIG. 2 illustrates a block diagram of an access point and a user terminal in accordance with certain aspects of the present disclosure.
FIG. 3 illustrates a block diagram of an example wireless device in accordance with certain aspects of the present disclosure.
FIG. 4 illustrates example operations that may be performed by a network to reduce power consumption associated with radio access technology (RAT) reselection, in accordance with certain aspects of the present disclosure.
FIG. 5 illustrates an example block diagram of a user equipment, in accordance with certain aspects of the present disclosure.
FIG. 6 illustrates example operations that may be performed by a user equipment to reduce power consumption associated with RAT reselection, in accordance with certain aspects of the present disclosure.
FIG. 7 illustrates example operations that may be performed by a user equipment to reduce power consumption associated with RAT reselection, in accordance with certain aspects of the present disclosure.
FIG. 8 illustrates another example block diagram of a user equipment, in accordance with certain aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### AN EXAMPLE WIRELESS COMMUNICATION SYSTEM

The techniques described herein can be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network can implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network can implement a radio technology such as Global System for Mobile Communications (GSM). An OFDMA network can implement a radio technology such as Evolved UTRA (E-UTRA), IEEE 802.11, IEEE 802.16, IEEE 802.20, Flash-OFDM, etc. UTRA, E-UTRA, and GSM are part of Universal Mobile Telecommunication System (UMTS). Long Term Evolution (LTE) is an upcoming release of UMTS that uses E-UTRA. UTRA, E-UTRA, GSM, UMTS and LTE are described in documents from an organization named "3rd Generation Partnership Project" (3GPP). cdma2000 is described in documents from an organization named "3rd Generation Partnership Project 2" (3GPP2). These various radio technologies and standards are known in the art. For clarity, certain aspects of the techniques are described below for LTE, and LTE terminology is used in portions of the description below.

Single carrier frequency division multiple access (SC-FDMA), which utilizes single carrier modulation and frequency domain equalization is a technique that can be utilized with various aspects described herein. SC-FDMA has similar performance and essentially the same overall complexity as those of an OFDMA system. SC-FDMA signal has lower peak-to-average power ratio (PAPR) because of its inherent single carrier structure. SC-FDMA has drawn great attention, especially in the uplink communications where lower PAPR greatly benefits the mobile terminal in terms of transmit power efficiency. It is currently a working assumption for an uplink multiple access scheme in 3GPP Long Term Evolution (LTE), or Evolved UTRA.

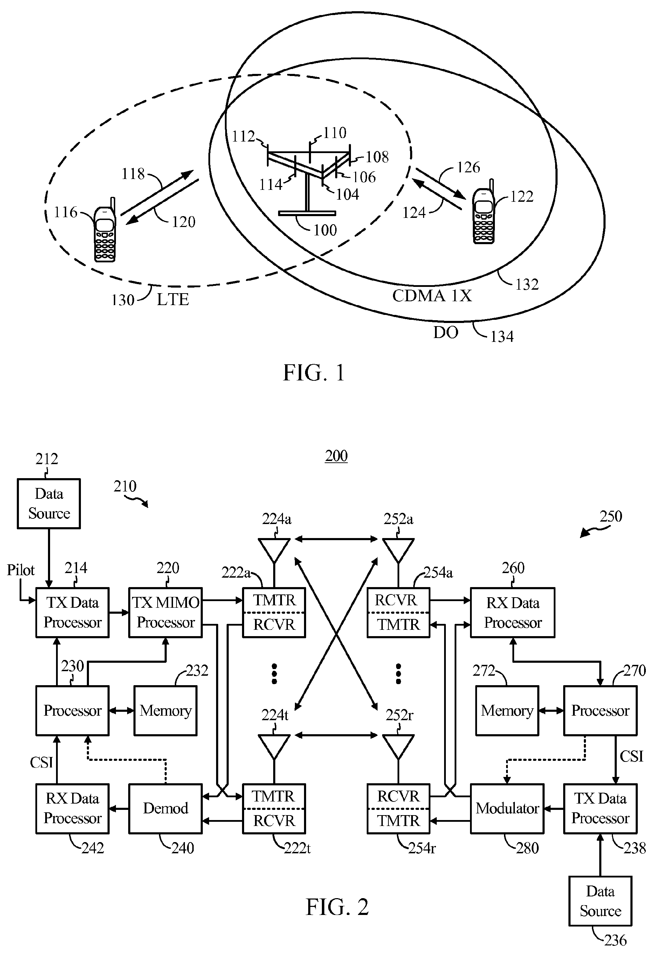

Referring to Fig. 1, a multiple access wireless communication system according to one aspect is illustrated. An access point 100 (AP) includes multiple antenna groups, one including 104 and 106, another including 108 and 110, and an additional including 112 and 114. An access point (AP) may also be referred to as a base station (BS), eNodeB, or simply eNB. In Fig. 1, only two antennas are shown for each antenna group, however, more or fewer antennas can be utilized for each antenna group. Access terminal 116 (AT) is in communication with antennas 112 and 114, where antennas 112 and 114 transmit information to access terminal 116 over forward link 120 and receive information from access terminal 116 over reverse link 118. An access terminal (AT) may also be referred to as a user terminal (UT), mobile station (MS), user equipment (UE), wireless communication device, or some other terminology. Access terminal 122 is in communication with antennas 106 and 108, where antennas 106 and 108 transmit information to access terminal 122 over forward link 126 and receive information from access terminal 122 over reverse link 124. In a frequency division duplex (FDD) system, communication links 118, 120, 124 and 126 can use different frequencies for communication. For example, forward link 120 can use a different frequency than that used by the reverse link 118. The access terminals 116, 122 may be capable of operating under two or more radio access technologies (e.g., multimode devices).

Each group of antennas and/or the area in which they are designed to communicate is often referred to as a sector of the access point. In one aspect, respective antenna groups are designed to communicate with access terminals in a sector of the areas covered by the access point 100.

In communication over forward links 120 and 126, the transmitting antennas of access point 100 may utilize beamforming in order to improve the signal-to-noise ratio of forward links for the different access terminals 116 and 122. Also, an access point using beamforming to transmit to access terminals scattered randomly through its coverage causes less interference to access terminals in neighboring cells than an access point transmitting through a single antenna to all of its access terminals.

Generally, a specific geographic area may be covered by one or more radio access technologies (RATs). For example, coverage areas of LTE, CDMA 1x and data optimized (DO) RATs are illustrated in FIG 1. In this example, curve 130 illustrates coverage area of LTE, curve 132 illustrates coverage area of CDMA 1x, and curve 134 illustrates coverage area of DO network. As illustrated, different RATs may have overlapping coverage in some areas. A multi-mode access terminal may switch between different RATs while moving through the coverage areas of these RATs depending on its priorities, signal strength of different RATs and other criteria. For example, the access terminal 122 may switch from its current network (e.g., CDMA 1x) to LTE when it enters the coverage area of LTE (e.g., curve 130).

FIG. 2 is a block diagram of an aspect of a transmitter system 210 (e.g., an access point) and a receiver system 250 (e.g., an access terminal) in a MIMO system 200. At the transmitter system 210, traffic data for a number of data streams is provided from a data source 212 to a transmit (TX) data processor 214.

In an aspect, each data stream is transmitted over a respective transmit antenna. TX data processor 214 formats, codes, and interleaves the traffic data for each data stream based on a particular coding scheme selected for that data stream to provide coded data.

The coded data for each data stream can be multiplexed with pilot data using OFDM techniques. The pilot data is typically a known data pattern that is processed in a known manner and can be used at the receiver system to estimate the channel response. The multiplexed pilot and coded data for each data stream is then modulated (e.g., symbol mapped) based on a particular modulation scheme selected for that data stream to provide modulation symbols. Examples of modulation schemes may include Binary Phase Shift Keying (BPSK), Quadrature Phase Shift Keying (QPSK), M-PSK, or M-QAM (Quadrature Amplitude Modulation) where M is an integer. The data rate, coding, and modulation for each data stream can be determined by instructions performed by processor 230, which may be coupled with the memory 232.

The modulation symbols for respective data streams are then provided to a TX MIMO processor 220, which can further process the modulation symbols (e.g., for OFDM). TX MIMO processor 220 then provides *N_{T}* modulation symbol streams to *N_{T}* transmitters (TMTR) 222a through 222t. In certain aspects, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270, which may be coupled with the memory 272, periodically determines which pre-coding matrix to use. Processor 270 formulates a reverse link message comprising a matrix index portion and a rank value portion. The reverse link message can comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

In an aspect, logical channels are classified into Control Channels and Traffic Channels. Logical Control Channels comprise a Broadcast Control Channel (BCCH), which is a downlink (DL) channel for broadcasting system control information; a Paging Control Channel (PCCH), which is a DL channel that transfers paging information; and a Multicast Control Channel (MCCH), which is a point-to-multipoint DL channel used for transmitting Multimedia Broadcast and Multicast Service (MBMS) scheduling and control information for one or several MTCHs. Generally, after establishing an RRC (radio resource control) connection this channel is only used by user equipments (UEs) that receive MBMS (Note: old MCCH+MSCH). Dedicated Control Channel (DCCH) is a point-to-point bi-directional channel that transmits dedicated control information and used by UEs having an RRC connection. In an aspect, Logical Traffic Channels comprise a Dedicated Traffic Channel (DTCH), which is a point-to-point bi-directional channel, dedicated to one UE, for the transfer of user information; and a Multicast Traffic Channel (MTCH), which is a point-to-multipoint DL channel for transmitting traffic data.

In an aspect, Transport Channels are classified into DL and uplink (UL). DL Transport Channels comprise a Broadcast Channel (BCH), Downlink Shared Data Channel (DL-SDCH) and a Paging Channel (PCH), the PCH for support of UE power saving (DRX cycle is indicated by the network to the UE), broadcasted over entire cell and mapped to PHY resources which can be used for other control/traffic channels. The UL Transport Channels comprise a Random Access Channel (RACH), a Request Channel (REQCH), an Uplink Shared Data Channel (UL-SDCH), and a plurality of PHY channels. The PHY channels comprise a set of DL channels and UL channels.

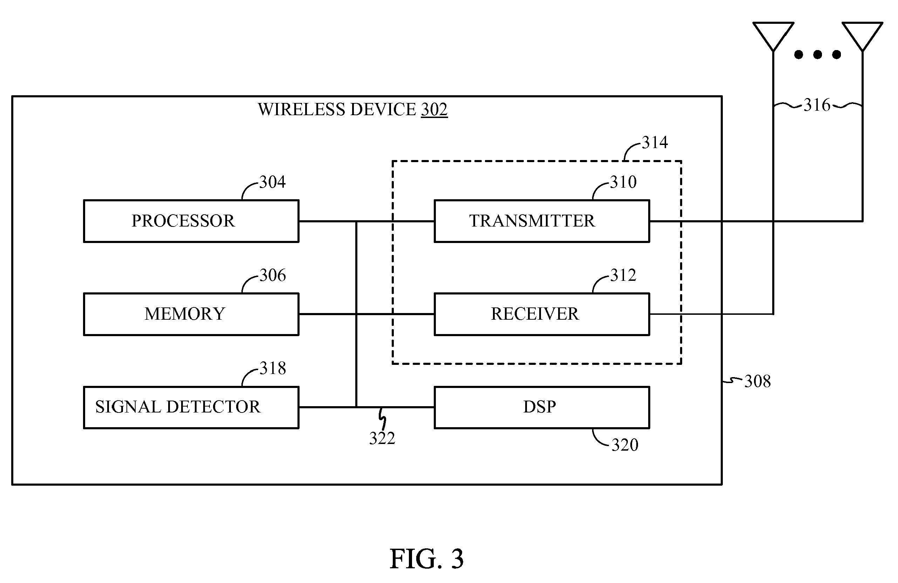

FIG. 3 illustrates various components that may be utilized in a wireless device 302 that may be employed within the wireless communication system from FIG. 1. The wireless device 302 is an example of a device that may be configured to implement the various methods described herein. The wireless device 302 may be an access point 100 from FIG. 1 or any of access terminals 116, 122.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

### EXAMPLE TECHNIQUES FOR REDUCING POWER CONSUMPTION ASSOCIATED WITH PERFORMING RESELECTION IN A MULTI-RAT SYSTEM

Various wireless standards have been enhanced to support reselection (e.g., idle handover) between multiple radio access technologies (RATs). For example, 3GPP2 standards have been enhanced to support reselection of a UE from CDMA 1x (hereinafter 1x) and/or High Rate Packet Data (HRPD, which is also known as Evolution Data Optimized (EVDO) or DO) RATs to LTE. In cases where the UE is in hybrid mode (e.g., using 1x RAT for voice calls and using DO RAT for data), certain aspects of the present disclosure may help reduce power consumption by performing reselection evaluation using a centralized mechanism that shares the information (e.g., regarding LTE neighbor lists or measurements made with information from LTE neighbor lists) across 1x and DO RATs.

According to certain aspects, various improvements and/or optimizations may be made by a network to determine on which domain (e.g., which RAT) to send a neighbor list. Upon receiving the neighbor list on a RAT, the UE may share the neighbor information with other RATs that are supported by the UE. For example, the network may decide to send LTE neighbor list information on 1x RAT. Upon receiving the neighbor list information, the UE (that supports 1x, DO and/or LTE RATs) may share LTE neighbor information with the DO RAT.

In addition, according to certain aspects, if a neighbor list is sent on multiple RATs (e.g., 1x and DO), various approaches are provided that utilize a central entity maintained at a UE, that combines neighbor list information obtained from the multiple RATs and/or measurements made using neighbor list information obtained from the multiple RATs. Using this central entity may lead to reduced power consumption at the UE; for example, by limiting the amount of time the UE spends on frequency scans and/or measurements.

The techniques presented herein may be utilized in a variety of multi-RAT systems. According to certain aspects, such a system may involve a multi-RAT UE that supports both 1x and DO and is capable of performing reselection to an LTE network from each of these RATs. In such a case, a neighbor list may traditionally be transmitted over both the 1x and DO RATs that specifies LTE neighbors. The techniques presented herein may involve algorithms, performed at the network side, to determine on which RAT to send such a neighbor list. Additionally or alternatively, the techniques presented herein may involve algorithms, that may be performed at the UE side, to share and/or combine information from such neighbor lists sent on one or both the 1x and DO RATs.

A reselection process from the DO RAT to LTE is described in 3GPP2 C.S0087 document. In this case, an LTE neighbor list is contained in an 'Other RAT Neighbor List Message'. A reselection process from the 1x RAT to LTE is described in 3GPP2 C.P0097 document. In this case, a LTE Neighbor List message is contained in an Alternative Technology Information Message (ATIM). The ATIM is defined in C.S005-E, but the LTE neighbor list message may be supported by 1x base stations compatible with earlier revisions of the standard (e.g., P_REVs), for example, if they have been upgraded to support LTE interworking. It should be noted that in the present disclosure, the neighbor list may be transmitted in any format.

Reselection evaluation may refer to performing frequency scans based on information obtained from the neighbor lists, and deciding whether or not to handover to a different network (e.g., LTE). In general, the more often the reselection evaluation is done, the smaller is the delay to reselect the other network when the UE enters its coverage. However, more frequent evaluations may lead to higher power consumption since each evaluation consumes power.

The techniques presented herein may allow UEs to implement various algorithms to combine information obtained from (or obtained using) neighbor lists received on two or more different RATs (e.g., 1x and DO). Such techniques may be designed in an attempt to achieve a balance between power consumption and the time it takes to reselect to another network (e.g., LTE) after UE moves into its coverage (ideally, decreasing power consumption without unduly increasing the time to reselect).

According to certain aspects, network-side decisions may be made to avoid or limit the number of times a neighbor list is transmitted on multiple RATs (e.g., both 1x and DO networks), since doing so may lead to wasteful measurements by the UE. For example, if the network transmits LTE neighbor information on 1x RAT, and transmits almost similar LTE neighbor information on the DO RAT, the UE may receive some duplicate information from the two different RATs, which may result in waste of power. In a conventional (non-optimized) flow, a UE operating in hybrid mode (e.g., communicating via both 1x and DO RATs) may wake up according to the paging cycles of both RATs. For example, the 1x stack may wake up at its paging cycle and evaluate reselection criteria to decide whether there is a need to measure an LTE frequency. If so, the UE may tune to LTE frequencies and perform measurements. The 1x stack may make reselection decisions based on the measurements. Similarly, the DO stack may wake up at its own paging cycle and evaluate reselection criteria to decide whether there is a need to measure an LTE frequency (e.g., independent from the measurements requested by the 1x stack). If so, the UE may tune to LTE frequencies and perform new measurements. The DO stack may make reselection decisions based on the new measurements. Therefore, each RAT stack may perform similar operations independently to decide whether or not to handover to LTE, which may result in duplicate measurements and waste of power.

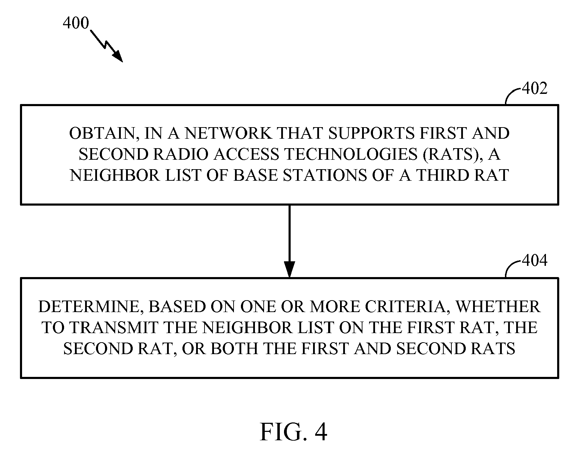

According to certain aspects, network-side operations (e.g., by an operator) may be taken to determine which domain (RAT) to use to transmit the neighbor list. FIG. 4 illustrates example network-side operations 400 that may be performed to determine which RAT to transmit a neighbor list on. At 402, a network that supports first and second RATs (e.g., 1x and DO RATs) may obtain a neighbor list of base stations of a third RAT (e.g., LTE). At 404, a determination may be made, based on one or more criteria, whether to transmit the neighbor list on the first RAT, the second RAT, or both the first and second RATs. The network may then transmit the neighbor list on the one or more of the first RAT, the second RAT or both the first and second RATs based on the determination.

It should be noted that in an area with no coverage from the third RAT, the network may set the number of neighbors in the neighbor list to zero before transmitting the neighbor list. Setting this number to zero may prevent a UE that supports (MultiMode System Selection) MMSS from unnecessarily scanning for an LTE neighbor frequency.

The criteria for determining which RAT the neighbor list is transmitted on may include whether one of the RATs has more robust coverage relative to another RAT. For example, if a 1x RAT provides more robust coverage than a DO RAT, a decision may be made to transmit the LTE neighbor list on the 1x RAT, but not on the DO (or at least more frequently on the 1x RAT than the DO RAT). In aspects, the criteria may comprise relative comprehensiveness of coverage of the first and second RATs for a desired territory of mobility.

For certain aspects, if the robustness of the coverage areas of the two RATs (e.g., 1x and DO) are determined to be the same, or at least relatively similar within some threshold amount (or some other priority), a decision may be made to use a network (e.g., RAT) that has a smaller cell size. Using a network that has a smaller cell size may allow an operator to specify the "LTE availability" with a finer granularity which may allow a UE to conserve some power.

For certain aspects, the criteria for determining which RAT the neighbor list is transmitted on may include relative paging cycle durations of the first and second RATs. According to certain aspects, if an operator decides to use only one RAT (e.g., to use only DO (i.e., HRPD) to transmit the neighbor list), the operator may account for the fact that this decision may lead to increased reselection delay. For example, in some situations the selected RAT may have long paging cycles. As an example, if HRPD is set to "non-always on", then a time between paging wakeups may be long (e.g., up to 40 seconds). Hence, reselection delay might increase for the device if list of LTE neighbors is only transmitted over HRPD RAT. Therefore, in cases where other criteria are satisfied (e.g., if coverage robustness and/or cell sizes are similar for both RATs) one of the RATs may be given a preference. For example, using a 1x network to send the LTE neighbor list may be preferred in this example, because 1x has shorter paging cycles.

For certain aspects, an operator may choose to transmit an LTE neighbor list on multiple RATs (e.g., on 1x and DO networks) for one or more reasons. These reasons may include, for example, the fact that some UEs operate in non-hybrid mode (and transmitting the LTE neighbor list on both networks might help ensure receipt by those UEs regardless of what network they are currently communicating on). In addition, transmitting on both RATs may simplify network planning since each RAT may transmit the neighbor list independently. Another scenario that may result in transmission on both RATs may happen when universal coverage is not guaranteed with either 1x-only or DO-only network. In some scenarios, the operator may mandate a UE-based solution as described below to reduce power consumption.

If, for any reason, an LTE neighbor list is transmitted on both 1x and DO networks, a UE may be configured to perform one or more operations in an effort to perform measurements, while reducing power consumption. According to certain aspects, a UE may be configured to measure an LTE frequency only once within a certain time, even if that LTE frequency is advertised on both the 1x and DO networks. This may be accomplished according to different approaches.

For example, one approach to limit the number of times a measurement is made for an LTE frequency is to share neighbor list information received on multiple RATs. According to one approach, a UE may combine the information received in neighbor lists over both 1x and DO RATs in a centralized list (e.g., in a data structure in some type of memory at the UE). The UE may use this centralized list to perform reselection evaluation in conjunction with waking up during paging cycles of either the 1x RAT or DO RAT, but not both (e.g., to prevent collision). The UE may then share the measurement with the other RAT (e.g., send a copy of the measurements to the stack of the other RAT). According to this approach, since measurements are not repeated (during paging cycles of both RATs), power consumption may be reduced.

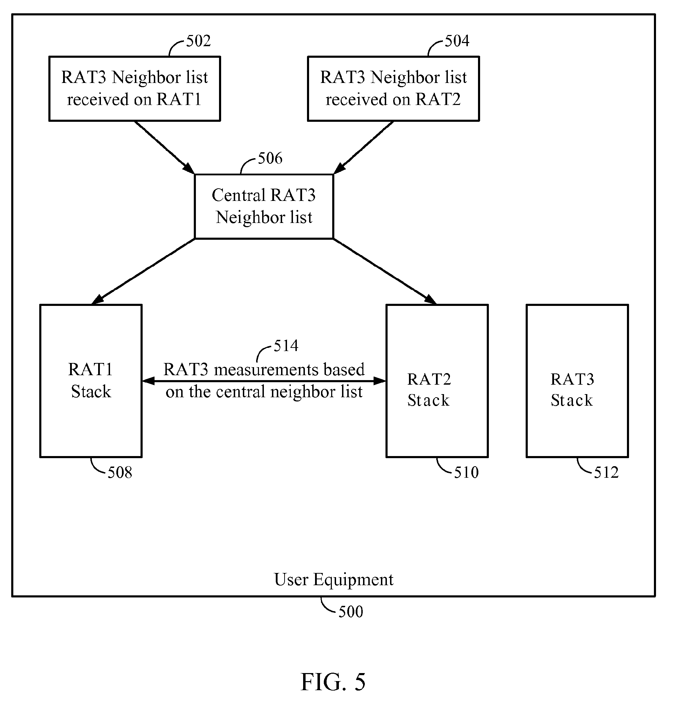

FIG. 5 illustrates an example block diagram of a user equipment, in accordance with certain aspects of the present disclosure. As illustrated, the UE 500 may be able to support multiple RATs (e.g., RAT1, RAT2, and RAT3). The UE may receive a list of neighbor base stations in the third RAT via the first RAT and store them (e.g., RAT3 neighbor list received on RAT1 502). The UE may also receive another list of neighbor base stations in the third RAT via the second RAT and store them (e.g., RAT3 neighbor list received on RAT2 504). The UE may combine the two lists of neighbors and store a combined neighbor list in central RAT3 neighbor list 506. When RAT1 stack 508 wakes up according to its paging cycles, it may use the information in the central RAT3 neighbor list to perform measurements on RAT3 and decide if reselection to RAT3 is preferred. The RAT1 stack 508 may share these measurements (e.g., RAT3 measurements based on the central neighbor list 514) with RAT2 stack 510, to prevent duplicate measurements on the same frequency. Similarly, RAT2 stack 510 may wake up and perform measurements on RAT3 and share the measurements with the RAT1 stack 508. For certain aspects, the UE may select one of the RATs for taking measurements in the third RAT and take measurements in the third RAT using the selected RAT based on the combined information. The UE may decide which RAT stack should make the measurements based on one or more criteria. For example, the UE may compare the paging cycle duration of RAT1 and RAT2 and select the RAT with smaller paging cycle to perform the measurements. Or, the UE may select the RAT which has more robust coverage. Based on the measurements, the UE may decide to reselect (handover) to RAT3 and use the RAT3 stack 512.

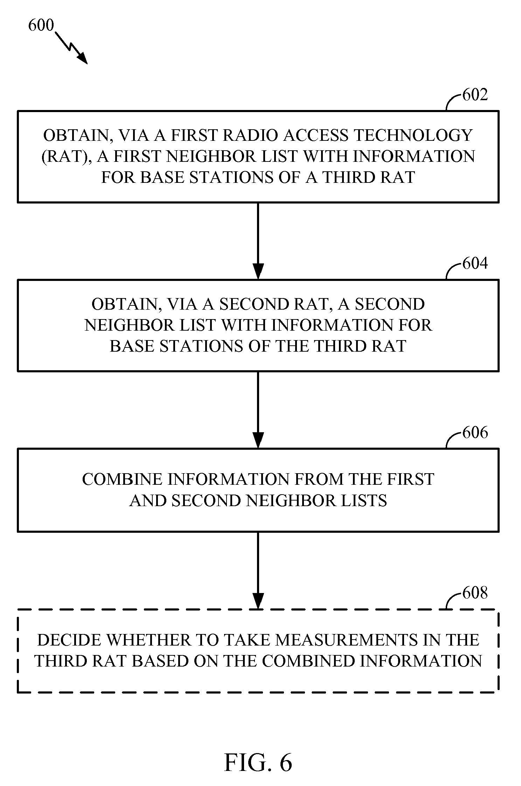

According to certain aspects, a UE may be configured to perform one or more operations in an effort to reduce power consumption in the event that a neighbor list is transmitted on multiple RATs (e.g., both 1x and DO). FIG. 6 illustrates example UE-side operations 600 that may be performed to combine neighbor list information received on multiple RATs. At 602, the UE obtains, via a first radio access technology (e.g., Ix), a first neighbor list with information for base stations of a third RAT (e.g., LTE). At 604, the UE obtains, via a second RAT (e.g., DO), a second neighbor list with information for base stations of the third RAT. At 606, the UE combines information from the first and second neighbor lists (e.g., in a centralized list). At 608, the UE decides whether or not to take measurements in the third RAT based on the combined information. In this manner, information obtained using neighbor information obtained in one RAT may be shared with a non-selected RAT.

Exactly how information from different lists is combined may vary, depending on a particular aspect. For example, if priorities (e.g., one RAT preferred over another) and/or thresholds (e.g., a signal level associated with a frequency for deciding whether to perform LTE measurements) are the same, substantially the same or similar in both networks, a combining process may be relatively straightforward. For example, if one of the neighbor lists has no frequency listed, then a UE may assume this corresponds to an area without LTE coverage and the combined neighbor list may have a NULL entry. Otherwise, the combined neighbor list may contain frequencies listed in either the neighbor list received on the 1x RAT or the neighbor list received on the DO RAT (e.g., representing a union of the two neighbor lists).

For certain aspects, if the priorities and/or the thresholds are not the same or they are substantially different in both networks, then a more complex combining scheme may be utilized. For example, a UE may choose priorities and/or thresholds that increase the probability of reselecting (selecting) and switching to the third RAT (e.g., LTE).

For example, a specific frequency may be common in the first neighbor list and the second neighbor list. In addition, a first threshold may correspond to the common frequency in the first neighbor list, and a second threshold may correspond to the common frequency in the second neighbor list. The UE may select the first threshold to correspond to the common frequency in the centralized list, if the first threshold increases the probability of reselection to the third RAT, otherwise, the UE may select the second threshold.

According to certain aspects, the measurements may be performed in a DO network if the paging cycles of the two networks have similar durations. Otherwise, the measurement may be performed on the 1x network (e.g., if the DO network is using a longer 40 s paging cycle).

According to certain aspects, frequency measurements taken on the different network stacks may be shared (e.g., measurements taken using the neighbor list information may be combined, instead of/or in addition to the neighbor list information).

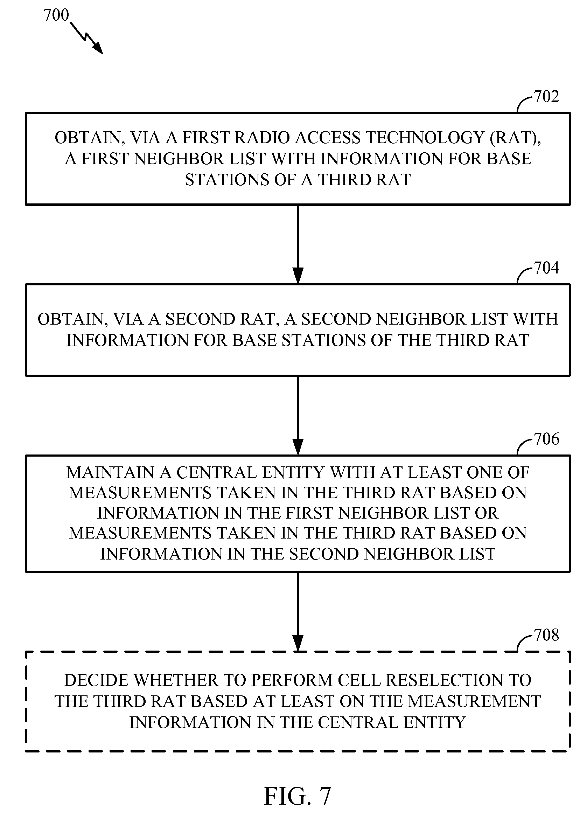

FIG. 7 illustrates example UE-side operations 700 that may be performed to make a reselection decision based on measurement information in a centralized list. At 702, the UE obtains, via a first radio access technology (RAT), a first neighbor list with information for base stations of a third RAT. At 704, the UE obtains, via a second RAT, a second neighbor list with information for base stations of the third RAT. At 706, the UE maintains a central entity with at least one of measurements taken in the third RAT based on information in the first neighbor list or measurements taken in the third RAT based on information in the second neighbor list. At 708, the UE decides whether to perform cell reselection to the third RAT based on measurement information in the central entity. The operations, of course, may also include periodically updating the centralized list, as measurements are taken.

As an example, LTE measurements may be shared between 1x and DO stacks running on the same UE. According to this approach, for example, when a 1x (or DO) stack has to perform a LTE measurement, it may check with the central entity to see if a valid measurement already exists for that frequency. If a valid measurement does exist, the UE may use this valid measurement to evaluate the reselection criterion. In this way, power consumption may be reduced since another (e.g., duplicate) measurement is not performed on the same frequency. If no valid measurement exists, the 1x (or the DO) stack may schedule a new LTE measurement. The UE may then evaluate reselection criterion using the new LTE measurement. According to certain aspects, if the new LTE measurement is such that it does not result in a reselection to LTE, this measurement may be passed to the central entity. In aspects, although such measurement, while still valid, may not cause reselection to LTE by a first stack (e.g., 1x), it may subsequently cause reselection to LTE by a second stack (e.g., DO).

According to certain aspects, the UE may consider measurements for a given frequency as valid for a predetermined amount of time. Therefore, measurements may be "aged" out of the central entity after the predetermined amount of time is passed. For example, the central entity may store the measurement for T_measure_valid seconds (e.g., with a suitable default value, such as 5.12 seconds) and discard the stale measurements that are older than the T_measure_valid. Using this approach, the 1x and DO stacks may not perform measurements on the same frequency when there is a recent measurement in the central entity, even if the LTE neighbor list is transmitted on both networks. Therefore, power consumption of the UE may be reduced. For certain aspects, the time in which the measurements are valid may be defined based on the mobility speed of the UE or other criteria.

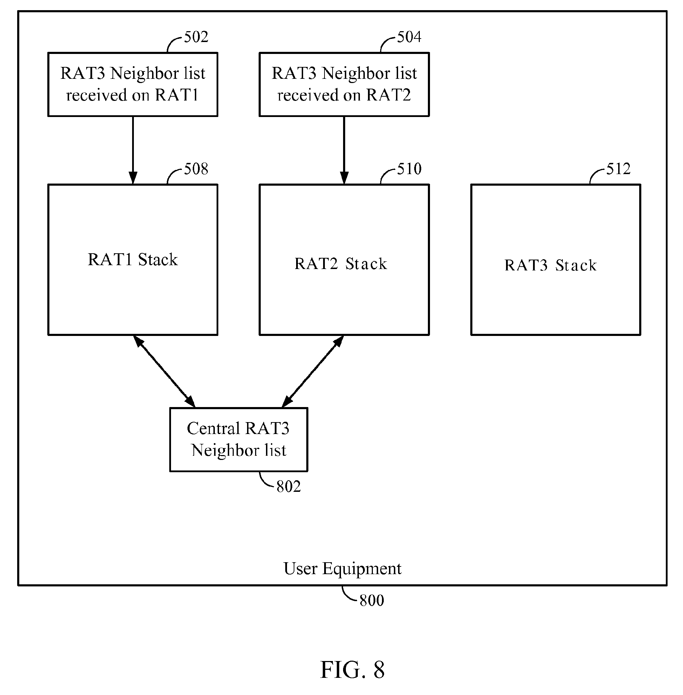

FIG. 8 illustrates another example block diagram of a user equipment 800, in accordance with certain aspects of the present disclosure. This block diagram contains similar blocks as the UE 500 illustrated in FIG. 5 with similar numbering. In addition, the UE 800 may include a central RAT3 measurement storage 802 to store the measurements on RAT3 performed by either RAT1 or RAT2, as described above. The central RAT3 measurement storage 802 may store the measurements with a time stamp and discard the measurements that are older than the T_measure_valid.

Depending on a particular implementation, the various approaches presented herein may be combined. For example, information from neighbor lists received over multiple RATs may be combined in a central list and measurements may also be combined in a central entity.

The various operations corresponding to blocks illustrated in the methods of FIGs. 4, 6 and 7 described above may be performed by various hardware and/or software component(s) and/or module(s).

For example, means for obtaining a neighbor list of base stations of a RAT may be performed by a receiver or any suitable receiving component (e.g., shown in FIG. 2). Means for determining may be performed by any suitable processing component, such as a processor (e.g., shown in FIG. 2).

In addition, means for obtaining a neighbor list with information for base stations of a RAT may be performed by any suitable receiving means, such as the receiver 254 as illustrated in FIG. 2. Means for combining information may be performed by any suitable combining means, such as the processor 270 as illustrated in FIG. 2. Means for deciding may be performed by any suitable deciding means, such as the processor 270. Means for maintaining a central entity may be performed by any suitable storing means, such as the memory 272 illustrated in FIG. 2.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

As used herein, a phrase referring to "at least one of" a list of items refers to any combination of those items, including single members. As an example, "at least one of: *a, b,* or *c*" is intended to *cover: a, b, c, a-b, a-c, b-c, and a-b-c.*

It is to be understood that the claims are not limited to the precise configuration and components illustrated above. Various modifications, changes and variations may be made in the arrangement, operation and details of the methods and apparatus described above without departing from the scope of the claims.

While the foregoing is directed to embodiments of the present disclosure, other and further embodiments of the disclosure may be devised without departing from the basic scope thereof, and the scope thereof is determined by the claims that follow.

In the following, further examples are described to facilitate the understanding of the invention:
1. A method for wireless communications, comprising:
   obtaining, in a network that supports first and second radio access technologies (RATs), a neighbor list of base stations of a third RAT; and
   determining, based on one or more criteria, whether to transmit the neighbor list on the first RAT, the second RAT, or both the first and second RATs.
2. The method of example 1, wherein at least one of the first and second RATs comprises a code division multiple access (CDMA) RAT.
3. The method of example 2, wherein at least one of the first and second RATs comprises a Data Optimized (DO) RAT.
4. The method of example 1, wherein the third RAT comprises a long term evolution (LTE) RAT.
5. The method of example 1, wherein the one or more criteria comprises relative robustness of coverage of the first and second RATs.
6. The method of example 1, wherein the one or more criteria comprises relative comprehensiveness of coverage of the first and second RATs for a desired territory of mobility.
7. The method of example 1, wherein the one or more criteria comprises relative size of coverage areas of the first and second RATs.
8. The method of example 1, wherein the one or more criteria comprises relative paging cycle duration of the first and second RATs.
9. The method of example 1, further comprising:
   transmitting the neighbor list on the first RAT, the second RAT, or both the first and second RATs based on the determination.
10. The method of example 9, wherein transmitting the neighbor list comprises:
   in an area with no coverage from the third RAT, setting number of neighbors in the neighbor list to zero; and
   transmitting the neighbor list.
11. The method of example 1, further comprising:
   transmitting the neighbor list on one of the first RAT or the second RAT based on the determination; and
   causing measurements to be performed in the third RAT based on the transmitted neighbor list.
12. A method for wireless communications, comprising:
   obtaining, via a first radio access technology (RAT), a first neighbor list with information for base stations of a third RAT;
   obtaining, via a second RAT, a second neighbor list with information for base stations of the third RAT; and
   combining information from the first and second neighbor lists.
13. The method of example 12, further comprising:
   taking measurements in the third RAT based on the combined information.
14. The method of example 13, further comprising:
   deciding whether to perform cell reselection to the third RAT based at least on the measurements taken in the third RAT.
15. The method of example 12, wherein at least one of the first and second RATs comprises a code division multiple access (CDMA) RAT.
16. The method of example 15, wherein at least one of the first and second RATs comprises a Data Optimized (DO) RAT.
17. The method of example 12, wherein the third RAT comprises a long term evolution (LTE) RAT.
18. The method of example 12, wherein the combining comprises:
   updating a centralized list with information from the first and second neighbor lists.
19. The method of example 12, further comprising:
   determining at least one of a priority or a threshold associated with the first neighbor list and second neighbor list are not different;
   wherein combining includes:
      creating a null list if the first neighbor list or second neighbor list includes no frequencies; and
      creating a list including frequencies from the first neighbor list and second neighbor list if each of the first neighbor list and the second neighbor list include at least one frequency.
20. The method of example 18, wherein updating the centralized list comprises:
   updating the centralized list such that probability of reselection to the third RAT increases.
21. The method of example 20, further comprising:
   determining at least one of a priority or a threshold associated with the first neighbor list and second neighbor list are different;
   wherein updating the centralized list such that probability of reselection to the third RAT increases if at least one of a priority or a threshold associated with the first neighbor list and second neighbor list are different.
22. The method of example 20, wherein updating the centralized list comprises:
   selecting a first threshold to correspond to a frequency which is common in the first neighbor list and the second neighbor list to include in the centralized list if the first threshold increases the probability of reselection to the third RAT, otherwise, selecting a second threshold, wherein the first threshold corresponds to the common frequency in the first neighbor list and the second threshold corresponds to the common frequency in the second neighbor list.
23. The method of example 12, further comprising:
   selecting the first RAT or the second RAT for taking measurements in the third RAT; and
   taking measurements in the third RAT using the selected RAT based on the combined information.
24. The method of example 23, wherein selecting the first RAT or the second RAT is based at least on a paging cycle of the first RAT.
25. The method of example 23, further comprising:
   sharing the measurements taken using the selected RAT with the other non-selected RAT.
26. A method for wireless communications, comprising:
   obtaining, via a first radio access technology (RAT), a first neighbor list with information for base stations of a third RAT;
   obtaining, via a second RAT, a second neighbor list with information for base stations of the third RAT; and
   maintaining a central entity with at least one of measurements taken in the third RAT based on information in the first neighbor list or measurements taken in the third RAT based on information in the second neighbor list.
27. The method of example 26, further comprising:
   deciding whether to perform cell reselection to the third RAT based at least on the measurements in the central entity.
28. The method of example 26, wherein the measurements taken did not result in cell reselection to the third RAT.
29. The method of example 26, wherein the first RAT takes the measurements in the third RAT based on information in the first neighbor list and the second RAT takes the measurements in the third RAT based on information in the second neighbor list.
30. The method of example 26, wherein at least one of the first and second RATs comprises a code division multiple access (CDMA) RAT.
31. The method of example 26, wherein at least one of the first and second RATs comprises a Data Optimized (DO) RAT.
32. The method of example 26, wherein the third RAT comprises a long term evolution (LTE) RAT.
33. The method of example 26, further comprising:
   taking a new measurement for a frequency of the third RAT, based on information obtained in at least one of the first and second neighbor lists, if a valid measurement for that frequency does not exist in the central entity.
34. The method of example 26, wherein the maintaining comprises considering measurements for a given frequency as valid for a predetermined amount of time.
35. The method of example 26, wherein the predetermined amount of time depends on mobility speed of a user equipment.
36. An apparatus for wireless communications, comprising:
   means for obtaining, in a network that supports first and second radio access technologies (RATs), a neighbor list of base stations of a third RAT; and
   means for determining, based on one or more criteria, whether to transmit the neighbor list on the first RAT, the second RAT, or both the first and second RATs.
37. The apparatus of example 36, further comprising:
   means for transmitting the neighbor list on the first RAT, the second RAT, or both the first and second RATs based on the determination.
38. The apparatus of example 36, further comprising:
   means for transmitting the neighbor list on one of the first RAT or the second RAT based on the determination; and
   means for causing measurements to be performed in the third RAT based on the transmitted neighbor list.
39. An apparatus for wireless communications, comprising:
   means for obtaining, via a first radio access technology (RAT), a first neighbor list with information for base stations of a third RAT;
   means for obtaining, via a second RAT, a second neighbor list with information for base stations of the third RAT; and
   means for combining information from the first and second neighbor lists.
40. The apparatus of example 39, further comprising:
   means for taking measurements in the third RAT based on the combined information.
41. The apparatus of example 39, further comprising:
   means for maintaining the combined information in a centralized list; and
   means for updating the centralized list by selecting a first threshold to correspond to a frequency which is common in the first neighbor list and the second neighbor list to include in the centralized list if the first threshold increases the probability of reselection to the third RAT, otherwise, selecting a second threshold, wherein the first threshold corresponds to the common frequency in the first neighbor list and the second threshold corresponds to the common frequency in the second neighbor list.
42. An apparatus for wireless communications, comprising:
   means for obtaining, via a first radio access technology (RAT), a first neighbor list with information for base stations of a third RAT;
   means for obtaining, via a second RAT, a second neighbor list with information for base stations of the third RAT; and
   means for maintaining a central entity with at least one of measurements taken in the third RAT based on information in the first neighbor list or measurements taken in the third RAT based on information in the second neighbor list.
43. The apparatus of example 42, further comprising:
   means for deciding whether to perform cell reselection to the third RAT based at least on the measurements in the central entity.
44. The apparatus of example 42, further comprising:
   means for taking a new measurement for a frequency of the third RAT, based on information obtained in at least one of the first and second neighbor lists, if a valid measurement for that frequency does not exist in the central entity.
45. An apparatus for wireless communications, comprising:
   at least one processor configured to obtain, in a network that supports first and second radio access technologies (RATs), a neighbor list of base stations of a third RAT and to determine, based on one or more criteria, whether to transmit the neighbor list on the first RAT, the second RAT, or both the first and second RATs; and
   a memory coupled with the at least one processor.
46. The apparatus of example 45, wherein the at least one processor is further configured to:
   transmit the neighbor list on the first RAT, the second RAT, or both the first and second RATs based on the determination.
47. The apparatus of example 45, wherein the at least one processor is further configured to:
   transmit the neighbor list on one of the first RAT or the second RAT based on the determination; and
   cause measurements to be performed in the third RAT based on the transmitted neighbor list.
48. An apparatus for wireless communications, comprising:
   at least one processor configured to obtain, via a first radio access technology (RAT), a first neighbor list with information for base stations of a third RAT, obtain, via a second RAT, a second neighbor list with information for base stations of the third RAT, and combine information from the first and second neighbor lists; and
   a memory coupled with the at least one memory.
49. The apparatus of example 48, wherein the at least one processor is further configured to:
   take measurements in the third RAT based on the combined information.
50. The apparatus of example 48, wherein the at least one processor is further configured to:
   maintain the combined information in a centralized list; and
   update the centralized list by selecting a first threshold to correspond to a frequency which is common in the first neighbor list and the second neighbor list to include in the centralized list if the first threshold increases the probability of reselection to the third RAT, otherwise, selecting a second threshold, wherein the first threshold corresponds to the common frequency in the first neighbor list and the second threshold corresponds to the common frequency in the second neighbor list.
51. An apparatus for wireless communications, comprising:
   at least one processor configured to obtain, via a first radio access technology (RAT), a first neighbor list with information for base stations of a third RAT, obtain, via a second RAT, a second neighbor list with information for base stations of the third RAT, and maintain a central entity with at least one of measurements taken in the third RAT based on information in the first neighbor list or measurements taken in the third RAT based on information in the second neighbor list; and
   a memory coupled with the at least one processor.
52. The apparatus of example 51, wherein the at least one processor is further configured to:
   decide whether to perform cell reselection to the third RAT based at least on the measurements in the central entity.
53. The apparatus of example 51, wherein the at least one processor is further configured to:
   take a new measurement for a frequency of the third RAT, based on information obtained in at least one of the first and second neighbor lists, if a valid measurement for that frequency does not exist in the central entity.
54. A program product comprising a computer-readable medium having instructions stored thereon, the instructions executable by one or more processors for:
   obtaining, in a network that supports first and second radio access technologies (RATs), a neighbor list of base stations of a third RAT; and
   determining, based on one or more criteria, whether to transmit the neighbor list on the first RAT, the second RAT, or both the first and second RATs.
55. The program product of example 54, wherein the instructions are further executable by one or more processors for:
   transmitting the neighbor list on the first RAT, the second RAT, or both the first and second RATs based on the determination.
56. The program product of example 54, wherein the instructions are further executable by one or more processors for:
   transmitting the neighbor list on one of the first RAT or the second RAT based on the determination; and
   causing measurements to be performed in the third RAT based on the transmitted neighbor list.
57. A program product comprising a computer-readable medium having instructions stored thereon, the instructions executable by one or more processors for:
   obtaining, via a first radio access technology (RAT), a first neighbor list with information for base stations of a third RAT;
   obtaining, via a second RAT, a second neighbor list with information for base stations of the third RAT; and
   combining information from the first and second neighbor lists.
58. The program product of example 57, wherein the instructions are further executable by one or more processors for:
   taking measurements in the third RAT based on the combined information.
59. The program product of example 57, wherein the instructions are further executable by one or more processors for:
   maintaining the combined information in a centralized list; and
   updating the centralized list by selecting a first threshold to correspond to a frequency which is common in the first neighbor list and the second neighbor list to include in the centralized list if the first threshold increases the probability of reselection to the third RAT, otherwise, selecting a second threshold, wherein the first threshold corresponds to the common frequency in the first neighbor list and the second threshold corresponds to the common frequency in the second neighbor list.
60. A program product comprising a computer-readable medium having instructions stored thereon, the instructions executable by one or more processors for:
   obtaining, via a first radio access technology (RAT), a first neighbor list with information for base stations of a third RAT;
   obtaining, via a second RAT, a second neighbor list with information for base stations of the third RAT; and
   maintaining a central entity with at least one of measurements taken in the third RAT based on information in the first neighbor list or measurements taken in the third RAT based on information in the second neighbor list.
61. The program product of example 60, wherein the instructions are further executable by one or more processors for:
   deciding whether to perform cell reselection to the third RAT based at least on the measurements in the central entity.
62. The program product of example 60, wherein the instructions are further executable by one or more processors for:
   taking a new measurement for a frequency of the third RAT, based on information obtained in at least one of the first and second neighbor lists, if a valid measurement for that frequency does not exist in the central entity.

## Claims

1. A method for wireless communications, comprising:
obtaining (402), in a network that supports first and second radio access technologies, RATs, a neighbor list of base stations of a third RAT; and determining (404), based on one or more criteria, whether to transmit the neighbor list on the first RAT, the second RAT, or both the first and second RATs.

2. The method of claim 1, wherein at least one of the first and second RATs comprises a code division multiplex access, CDMA, RAT.

3. The method of claim 2, wherein at least one of the first and second RATs comprises a Data Optimized, DO, RAT.

4. The method of claim 1, wherein the third RAT comprises a long term evolution, LTE, RAT.

5. The method of claim 1, wherein the one or more criteria comprises relative robustness of coverage of the first and second RATs.

6. The method of claim 1, wherein the one or more criteria comprises relative comprehensiveness of coverage of the first and second RATs for a desired territory of mobility.

7. The method of claim 1, wherein the one or more criteria comprises relative size of coverage areas of the first and second RATs.

8. The method of claim 1, wherein the one or more criteria comprises relative paging cycle duration of the first and second RATs.

9. The method of claim 1, further comprising:
transmitting the neighbor list on the first RAT, the second RAT, or both the first and second RATs based on the determination.

10. The method of claim 9, wherein transmitting the neighbor list comprises:
in an area with no coverage from the third RAT, setting number of neighbors in the neighbor list to zero; and
transmitting the neighbor list.

11. The method of claim 1, further comprising:
transmitting the neighbor list on one of the first RAT or the second RAT based on the determination; and
causing measurements to be performed in the third RAT based on the transmitted neighbor list.

12. An apparatus for wireless communications, comprising:
means for obtaining, in a network that supports first and second radio access technologies, RATs, a neighbor list of base stations of a third RAT; and
means for determining, based on one or more criteria, whether to transmit the neighbor list on the first RAT, the second RAT, or both the first and second RATs.

13. The apparatus of claim 12, further comprising:
means for transmitting the neighbor list on the first RAT, the second RAT, or both the first and second RATs based on the determination.

14. The apparatus of claim 12, further comprising:
means for transmitting the neighbor list on one of the first RAT or the second RAT based on the determination; and
means for causing measurements to be performed in the third RAT based on the transmitted neighbor list.

15. A computer-readable medium comprising code to perform the method according to any one of claims 1 to 11 when executed on a computer.

## Patentansprüche

1. Verfahren zur drahtlosen Kommunikation, umfassend:
Erhalten (402), in einem Netzwerk, welches erste und zweite Funkzugangstechnologien, RATs, unterstützt, einer Nachbarliste von Basisstationen einer dritten RAT; und
Bestimmen (404), basierend auf einem oder mehreren Kriterien, ob die Nachbarliste mit der ersten RAT, der zweiten RAT oder der ersten und der zweiten RAT übermittelt werden soll.

2. Verfahren nach Anspruch 1, wobei wenigstens eine der ersten und zweiten RATs eine Code-Divisions-Vielfachzugriff-, CDMA, RAT umfasst.

3. Verfahren nach Anspruch 2, wobei wenigstens eine der ersten und zweiten RATs eine datenoptimierte, DO, RAT umfasst.

4. Verfahren nach Anspruch 1, wobei die dritte RAT langzeitentwicklungs- [long term evolution], LTE-, RAT umfasst.

5. Verfahren nach Anspruch 1, wobei das eine oder die mehreren Kriterien die relative Robustheit der Abdeckung der ersten und zweiten RATs umfassen.

6. Verfahren nach Anspruch 1, wobei das eine oder die mehreren Kriterien die relative Ausdehnung der ersten und zweiten RATs für ein für Mobilität gewünschtes Gebiet umfassen.

7. Verfahren nach Anspruch 1, wobei das eine oder die mehreren Kriterien die relative Größe der von den ersten und zweite RATs abgedeckten Gebiete umfassen.

8. Verfahren nach Anspruch 1, wobei das eine oder die mehreren Kriterien eine relative Paging-Zyklusdauer der ersten und zweite RATs umfassen.

9. Verfahren nach Anspruch 1, weiter umfassend:
Übertragen der Nachbarliste mit der ersten RAT, der zweiten RAT oder der ersten und der zweiten RAT basierend auf der Bestimmung.

10. Verfahren nach Anspruch 9, wobei das Übertragen der Nachbarliste umfasst:
in einem Gebiet ohne Abdeckung durch die dritte RAT, Setzen der Anzahl der Nachbarn in der Nachbarliste auf null; und
Übertragen der Nachbarliste.

11. Verfahren nach Anspruch 1, weiter umfassend:
Übertragen der Nachbarliste über die erste RAT oder die zweite RAT basierend auf der Bestimmung; und
Veranlassen von in der dritten RAT durchzuführenden Messungen basierend auf der übertragenen Nachbarliste.

12. Vorrichtung zur drahtlosen Kommunikation, umfassend:
Mittel zum Erhalten, in einem Netzwerk, welches erste und zweite Funkzugangstechnologien, RATs, unterstützt, einer Nachbarliste von Basisstationen einer dritten RAT; und
Mittel zum Bestimmen, basierend auf einem oder mehreren Kriterien, ob die Nachbarliste mit der ersten RAT, der zweiten RAT oder der ersten und der zweiten RAT übermittelt werden soll.

13. Vorrichtung nach Anspruch 12, weiter umfassend:
Mittel zum Übertragen der Nachbarliste über die erste RAT, die zweite RAT oder die erste und die zweite RAT basierend auf der Bestimmung.

14. Vorrichtung nach Anspruch 12, weiter umfassend:
Mittel zum Übertragen der Nachbarliste mit der ersten RAT oder der zweiten RAT basierend auf der Bestimmung; und
Mittel zum Veranlassen von in der dritten RAT durchzuführenden Messungen basierend auf der übertragenen Nachbarliste.

15. Computer-lesbares Medium umfassend Code zum Durchführen des Verfahrens gemäß irgend einem der Ansprüche 1 bis 11, wenn dieser auf einem Computer ausgeführt wird.

## Revendications

1. Un procédé de communication sans fil, comprenant :
l'obtention (402), dans un réseau qui supporte une première et une seconde technologie d'accès radio, RAT, une liste de voisinage de stations de base d'une troisième RAT ; et
la détermination (404), sur la base d'un ou plusieurs critères, s'il y a lieu ou non de transmettre la liste de voisinage sur la première RAT, la seconde RAT ou la première et la seconde RAT à la fois.

2. Le procédé de la revendication 1, dans lequel au moins l'une d'entre la première et la seconde RAT comprend une RAT d'accès multiple par répartition en code, CDMA.

3. Le procédé de la revendication 2, dans lequel au moins l'une d'entre la première et de la seconde RAT comprend une RAT à optimisation des données, DO.

4. Le procédé de la revendication 1, dans lequel la troisième RAT comprend une RAT évolution à long terme, LTE.

5. Le procédé de la revendication 1, dans lequel les un ou plusieurs critères comprennent la robustesse relative de la couverture de la première et de la seconde RAT.

6. Le procédé de la revendication 1, dans lequel les un ou plusieurs critères comprennent le caractère plus ou moins complet de la couverture de la première et de la seconde RAT pour un territoire de mobilité souhaité.

7. Le procédé de la revendication 1, dans lequel les un ou plusieurs critères comprennent la taille relative des zones de couverture de la première et de la seconde RAT.

8. Le procédé de la revendication 1, dans lequel les un ou plusieurs critères comprennent la durée relative d'un cycle de paging de la première et de la seconde RAT.

9. Le procédé de la revendication 1, comprenant en outre :
la transmission de la liste de voisinage sur la première RAT, la seconde RAT ou la première et la seconde RAT à la fois sur la base de la détermination.

10. Le procédé de la revendication 9, dans lequel la transmission de la liste de voisinage comprend :
dans une zone dépourvue de couverture par la troisième RAT, la mise à zéro d'un nombre de voisins dans la liste de voisinage ; et
la transmission de la liste de voisinage.

11. Le procédé de la revendication 1, comprenant en outre :
la transmission de la liste de voisinage sur l'une d'entre la première RAT ou la seconde RAT sur la base de la détermination ; et
permettre l'exécution de mesures dans la troisième RAT sur la base de la liste de voisinage transmise.

12. Un équipement de communication sans fil, comprenant :
des moyens d'obtention, dans un réseau qui supporte une première et une seconde technologie d'accès radio, RAT, une liste de voisinage de stations de base d'une troisième RAT ; et
des moyens de détermination, sur la base d'un ou plusieurs critères, s'il y a lieu de transmettre la liste de voisinage sur la première RAT, la seconde RAT ou la première et la seconde RAT à la fois.

13. L'équipement de la revendication 12, comprenant en outre :
des moyens de transmission de la liste de voisinage sur la première RAT, la seconde RAT ou la première et la seconde RAT à la fois sur la base de la détermination.

14. L'équipement de la revendication 12, comprenant en outre :
des moyens de transmission de la liste de voisinage sur l'une d'entre la première RAT ou la seconde RAT sur la base de la détermination ; et
des moyens pour faire en sorte que des mesures soient effectuées dans la troisième RAT sur la base de la liste de voisinage transmise.

15. Un support lisible par calculateur comprenant du code pour mettre en oeuvre le procédé selon l'une des revendications 1 à 11 lorsqu'il est exécuté sur un calculateur.
